# EUROPÄISCHE PATENTANMELDUNG

(11) **EP 2 586 818 A1**
(43) Veröffentlichungstag der Anmeldung: **01.05.2013**
(21) Anmeldenummer: 11186678.6
(22) Anmeldetag: 26.10.2011
(51) Int. Cl.: C08J 3/00, C08L 69/00, C08G 64/00

(54) **Verfahren zur Herstellung von Polypropylencarbonatdispersionen**

(71) Anmelder: BASF SE, 67056 Ludwigshafen (DE)
(72) Erfinder: Güntherberg, Norbert, 67346 Speyer (DE); Brym, Anna Katharina, 67117 Limburgerhof (DE); Görtz, Hans-Helmut, 67251 Freinsheim (DE)

(57) **Zusammenfassung**

Die vorliegende Erfindung betrifft ein Verfahren zur Herstellung von Polypropylencarbonatdispersionen, beinhaltend die Schritte:
(a) Einspritzen einer Lösung eines Polypropylencarbonats in einem aprotischen, nicht mit Wasser mischbaren Lösungsmittel in einen Extruder,
(b) Entfernen des aprotischen Lösungsmittels mittels Entgasung in den ersten Zonen des Extruders, gegebenenfalls unter vermindertem Druck,
(c) Zudosieren eines Dispergiermittels und des Wassers als Einzelkomponenten oder vorgemischt,
(d) kräftige Durchmischung des Gemischs aus Wasser, Dispergiermittel und Polymerschmelze im Extruder, und
(e) Austrag der Dispersion unterhalb des Siedepunktes des Wassers.

## Beschreibung

Die vorliegende Erfindung betrifft ein Verfahren zur Herstellung von Polypropylencarbonatdispersionen, beinhaltend die Schritte:
(a) Einspritzen einer Lösung eines Polypropylencarbonats in einem aprotischen, nicht mit Wasser mischbaren Lösungsmittel in einen Extruder,
(b) Entfernen des aprotischen Lösungsmittels mittels Entgasung in den ersten Zonen des Extruders, gegebenenfalls unter vermindertem Druck,
(c) Zudosieren eines Dispergiermittels und des Wassers als Einzelkomponenten oder vorgemischt,
(d) kräftige Durchmischung des Gemischs aus Wasser, Dispergiermittel und Polymerschmelze im Extruder, und
(e) Austrag der Dispersion unterhalb des Siedepunktes des Wassers.

Polypropylencarbonat neigt infolge der niedrigen Glastemperatur, die in der Regel bei unter 40°C liegt, zur Verbackung. Dadurch ist der Transport, die Lagerung und Handhabung des Materials erheblich erschwert. So können in geschlossenen Räumen, wie z.B. beim Transport in Containern Temperaturen von bis zu 70°C erreicht werden. Infolge dessen verbackt Polypropylencarbonat und kann nicht ohne Aufbereitung weiterverarbeitet werden. Bei Anwesenheit von Weichmachern, wie z.B. dem bei der Herstellung als Nebenprodukt auftretenden zyklischen Propylencarbonat, kann die Glastemperatur niedriger als 30 °C liegen. Auch wenn das Polypropylencarbonat unterstöchiometrische Mengen von Kohlendioxid enthält, ist die Glastemperatur deutlich niedriger. Bei diesen Polypropylencarbonat-Typen ist die Verbackungsneigung besonders deutlich ausgeprägt.

Aus der Schrift WO 2010/100103 ist ein Eintopfverfahren zur Herstellung von Polypropylencarbonatmischungen bekannt, das zunächst das Polypropylencarbonat in einem aprotischen Lösungsmittel bereitstellt, das Lösungsmittel in einem Extruder durch Entgasung entfernt und schließlich eine weitere Polymerkomponente mit einer höheren Glastemperatur einspeist und somit die Polymermischung ohne Zwischenisolierung des klebrigen Polypropylencarbonats gewinnt.

Für bestimmte Anwendungen, beispielsweise zur Papierveredelung oder für sonstige Beschichtungen ist es vorteilhaft, das Polymer in fein disperser Form, beispielsweise als Dispersion oder Emulsion vorliegen zu haben. Feinteilige Dispersionen mit geeigneten Emulgatoren sind über längere Zeit lagerstabil.

Zur Herstellung derartiger geeigneter Dispersionen wird das Polymer üblicherweise aufgeschmolzen und mit oberflächenaktiven Substanzen versetzt und dann beispielsweise in Wasser emulgiert, wobei je nach Güte der oberflächenaktiven Substanzen und der Viskositätsverhältnisse mehr oder weniger Scherung zur Dispergierung aufgewandt werden muss. So lassen sich beispielsweise in einem Rührkessel, versehen mit Dissolver-Rührer aus dem aufgeschmolzenen Propylencarbonat mit einer oberflächenaktiven Substanz unter Rühren und langsamer Zugabe von Wasser, welches gegebenenfalls weitere oberflächenaktive Substanzen enthält, Dispersionen von Polypropylencarbonat in Wasser herstellen.

Aus der Schrift WO 2001/064774 ist die Herstellung von wässrigen Polymerdispersionen mit Teilchengrößen im Bereich von 2 bis einige 100 µm in einem gleichsinnig drehenden Zweischneckenextruder bekannt. Dieses elegante Verfahren setzt jedoch die vorherige Isolierung des Polymers voraus, was beim Polypropylencarbonat aufgrund seiner Verbackungsneigung wie erwähnt schwierig ist.

Die Aufgabe der vorliegenden Erfindung bestand darin, ein Verfahren zur Herstellung einer wässrigen Polypropylencarbonatdispersion bereitzustellen, das ohne die aufwendige Isolierung und Lagerung des zur Verbackung neigenden Polypropylencarbonats auskommt.

Demgemäß wurde das eingangs erwähnte Eintopfverfahren gefunden, das nach Entfernung des aprotischen Lösungsmittels im Schritt (b) der verbleibenden Polycarbonatschmelze im Extruder ein Gemisch von Wasser und Dispergiermittel zusetzt (Schritt c) und durch kräftige Durchmischung eine wässrige Dispersion des Polypropylencarbonats herstellt (Schritte d und e). Auf eine Zwischenisolierung des klebrigen Polypropylencarbonats kann somit verzichtet werden.

Im Folgenden wird das erfindungsgemäße Verfahren näher beschrieben.

Unter Polypropylencarbonaten werden die durch Copolymerisation von Propylenoxid und Kohlendioxid hergestellten Polymere (s. beispielsweise WO 2003/029325, WO 2006/061237 oder WO 2007/125039) verstanden.

Die Polypropylencarbonat-Kette kann sowohl Ether- als auch Carbonatgruppen enthalten. Der Anteil an Carbonatgruppen im Polymer ist abhängig von den Reaktionsbedingungen wie insbesondere dem verwendeten Katalysator. In den bevorzugten Polypropylencarbonaten sind mehr als 85 und bevorzugt mehr als 90 % und insbesondere bevorzugt größer 95 % aller Verküpfungen Cabonat-Gruppen. Geeignete Zink- und Kobalt-Katalysatoren sind in US 4789727 und US 7304172 beschrieben. Polypropylencarbonat kann weiterhin analog Soga et al., Polymer Journal, 1981, 13, 407-10 hergestellt werden. Das Polymer ist auch kommerziell erhältlich und wird beispielsweise von Empower Materials Inc. oder Aldrich am Markt angeboten.

Bei der Aufarbeitung ist es besonders wichtig, den Katalysator möglichst quantitativ zu entfernen. Hierzu wird in der Regel die Reaktionsmischung mit einem polaren aprotischen, mit Wasser nicht mischbaren Lösungsmittel verdünnt. Anschließend wird in der Regel mit einer Säure wie Essigsäure und/oder einem Säureanhydrid wie Essigsäureanhydrid versetzt und mehrere Stunden bei leicht erhöhter Temperatur gerührt. Die organische Phase wird gewaschen und getrennt. Die organische Phase wird vorzugweise in die erste Zone des Extruders eingespeist (Schritt a des erfindungsgemäßen Verfahrens). Die organische Phase enthält in der Regel zwischen 5 bis 40 Gew.-%, vorzugsweise 10 bis 30 Gew.-% Polypropylencarbonat.

In jüngerer Zeit wurden Polypropylencarbonate mit einem Polycarbonatanteil von nahezu 100 % und einem hohen Anteil an Kopf/Schwanz-Verknüpfung von Firmen wie SK Energy und Novomer entwickelt (s. WO 2010013948, WO2010028362 und WO2010022388). Diese Produkte sind für das erfindungsgemäße Verfahren ebenso geeignet.

Das Molekulargewicht Mn der nach den obengenannten Verfahren hergestellten Polypropylencarbonate beträgt in der Regel 70.000 bis 200.000 Dalton. Das Molekulargewicht Mw liegt üblicherweise bei 250.000 bis 2.000.000 Dalton.

Die Polydispersität (Verhältnis von Gewichtsmittel (Mw) zu Zahlenmittel (Mn)) liegt in der Regel zwischen 1 und 80 und vorzugsweise zwischen 2 und 10. Diese Polypropylencarbonate können bis zu 1 % Carbamat- und Harnstoff-Gruppen enthalten.

Setzt man anstelle von Polypropylencarbonat mit einem Polyetheranteil von kleiner 5 % ein Polypropylencarbonat mit einem Polyetheranteil von 6 bis 25 Gew.-% ein, so sinkt die Glasübergangstemperatur Tg auf bis zu 1 °C ab.

Das erfindungsgemäße Verfahren beinhaltet die folgenden Schritte:
(a) Einspritzen einer Lösung eines Polypropylencarbonats in einem aprotischen, nicht mit Wasser mischbaren Lösungsmittel in einen Extruder,
(b) Entfernen des aprotischen Lösungsmittels mittels Entgasung in den ersten Zonen des Extruders, gegebenenfalls unter vermindertem Druck,
(c) Zudosieren eines Dispergiermittels und des Wassers als Einzelkomponenten oder vorgemischt,
(d) kräftige Durchmischung des Gemischs aus Wasser, Dispergiermittel und Polymerschmelze im Extruder, und
(e) Austrag der Dispersion unterhalb des Siedepunktes des Wassers.

### Zu Schritt (a):

Unter einem aprotischen, nicht mit Wasser mischbaren Lösungsmittel sind Lösungsmittel wie beispielsweise Carbonsäureester (insbesondere Essigsäureethylester), Ketone (insbesondere Aceton) und Ether (insbesondere Tetrahydrofuran) zu verstehen. Essigsäureethylester hat sich als bevorzugtes, aprotisches, nicht mit Wasser mischbares Lösungsmittel herausgestellt.

Die Polypropylencarbonat-haltige Lösung wird vorzugweise in die zweite Zone des Extruders eingespeist. Die erste Teilentgasung geschieht vorzugsweise über die Zonen 1 bis 3. Die Lösung enthält in der Regel zwischen 5 bis 60 Gew.-%, vorzugsweise 10 bis 40 Gew.-% Polypropylencarbonat. Selbstverständlich kann die Lösung des Polypropylencarbonats in einem aprotischen, nicht mit Wasser mischbaren Lösungsmittel auch auf anderem Weg als in WO 2003/029325 beschrieben hergestellt werden.

### Zu Schritt (b):

Das Lösungsmittel wird vorzugsweise in den darauffolgenden Zonen des Extruders ohne Vakuum und in späteren Zonen des Extruders im Vakuum entfernt. Dabei hat sich ein Vakuum von 5 bis 500 und insbesondere von 10 bis 100 mbar als vorteilhaft erwiesen. Vorzugsweise werden in diesen Zonen des Extruders Temperaturen von 110 bis 220°C und insbesondere bevorzugt von 130 bis 160°C eingestellt. Das entfernte Lösemittel wird kondensiert und kann weiterverwendet werden. Die realen Temperaturen innerhalb des Extruders liegen tiefer, insbesondere durch Siedekühlung des Lösungsmittels.

### Zu Schritt (c):

In Schritt c wird ein Gemisch aus Wasser und Dispergiermittel in den Extruder zudosiert. Das Dispergiermittel wird in der Regel in einer Menge von 0,1 bis 10 Gew.-%, insbesondere in einer Menge von 0,2 bis 5 Gew.-%, bezogen auf die zu dispergierende Menge an Polypropylencarbonat zugesetzt.

Die Zugabe des Dispergiermittels und des Wassers kann gemeinsam als Dispergiermittellösung erfolgen. In einer anderen bevorzugten Variante kann auch das Dispergiermittel zuerst mit der Polymerschmelze vermischt und dann das Wasser über eine oder mehrere Dosierstellen zugegeben werden. Diese Vorgehensweise kann die Dispersionsherstellung erleichtern, da zuerst eine stabile Dispersion mit hohem Seifengehalt gebildet wird. Auch sind Mischformen der Zugabeweise denkbar, wobei zuerst eine konzentrierte Seifenlösung zugegeben wird und nach Durchmischung die entstandene Dispersion weiter mit Wasser oder verdünnter Seifenlösung verdünnt wird. Das entspricht der Vorgehensweise in einer Batch-Variante, bei der zunächst eine Schmelze/Dispergiermittel-Mischung vorgelegt und durch sukzessive Wasserzugabe die Dispersion erzeugt wird. Das vorliegende Kontiverfahren kann höhere Raum/Zeit-Ausbeuten liefern.

Gebräuchliche nichtionische Dispergiermittel sind z.B. Polyvinylalkohole, Polyvinylacetat, Polyacrylamid, Polyvinylpyrrolidon, Poly-C₂-C₃-alkylenglykole, insbesondere Polyethylenglykole - die auch als Polyethylenoxid bezeichnet werden -, und Poly(ethylen-co-propylen)glykole - die auch als Poly(ethylenoxid-co-propylenoxid) bezeichnet werden - hierunter speziell Poly(ethylenoxid-co-propylenoxid)-Triblockcopolymere, weiterhin Pfopfpolymerisate von Vinylacetat und/oder Vinylpropionat auf Poly-C₂-C₃-alkylenglykole oder ein- oder beidseitig mit Alkyl, Carboxyl- oder Aminogruppen endgruppenverschlossene Poly-C₂-C₃-alkylenglykole; besonders bevorzugt sind Poly-C₂-C₃-alkylenglykole mit einem zahlenmittleren Molekulargewicht im Bereich von 2000 bis 20000 Dalton. In der Regel können auch Mischungen von nichtionischen Tensiden mit 1 bis 70 Gew.-%, vorzugsweise 3 bis 30 Gew.-% anionischen Tensiden eingesetzt werden.

### Zu Schritt (d):

Der Energieeintrag durch Scherung beträgt in der Regel 0.05 bis 50 kW, vorzugsweise 0,1 bis 10 kW für 1 kg Polymer. Ein gewisser Anteil wird hiervon für die Lösemittelentgasung verwendet. Der Energieeintrag durch Heizung ist in der obigen Angabe nicht enthalten.
Die Schergeschwindigkeit liegt üblicherweise bei 200 (500 UPM) bis 500 (1200 UPM) s-1 und ist viskositätsabhängig.

In der Dispergierzone sorgen Knetblöcke und insbesondere Zahnmischelemente für die intensive Durchmischung der wässrigen Komponente mit der Polymerschmelze.

### Zu Schritt (e):

Der Austrag der wässrigen Dispersion erfolgt in der Regel bei Temperaturen unter 100 °C, vorzugsweise unter 95°C.

Die nach dem erfindungsgemäßen Verfahren erhältlichen Polypropylencarbonatdispersionen sind für eine Vielzahl von Anwendungen geeignet, die üblicherweise für wässrige Polymerdispersionen in Betracht kommen. Insbesondere eignen sich die wässrigen Dispersionen als Bindemittelbestandteil in wässrigen Bindemittelzusammensetzungen, insbesondere für Bindemittelzusammensetzungen für die Papierherstellung, z.B. als Leimungsmittel für Papier, als Masseleimungsmittel oder als Mittel zur Oberflächenleimung, als Mittel zur Verfestigung von Papier, als Bindemittel für die Papierstreicherei, sowie als Bindemittel in pigmentfreien Beschichtungsmitteln, für die Herstellung von Barrierebeschichtungen auf Papier, Pappe oder Karton, weiterhin in Bindemittelzusammensetzungen für Faserbindung und für die Herstellung von Vliesstoffen. Zudem eignen sich die wässrigen Dispersionen in Klebstoffen, beispielsweise als Kaschierklebstoffe, z.B. zum Kaschieren von Kunststofffolien auf flächige Träger wie Papier, Pappe, Karton oder Kunststofffolien, oder zur Formulierung von Wirkstoffen im Agrobereich oder in der Pharmazie. Die erfindungsgemäßen Polymerdispersionen können auch zur Herstellung von Folienmaterialien verwendet werden.

### Verfahrensbeispiele

### Die Einsatzstoffe

### Polypropylencarbonatlösung

Eingesetzt wurde eine Polypropylencarbonatlösung enthaltend einen Feststoffgehalt von 13,5 Gew.-% in Ethylacetat/kleiner 10 Gew.-%Toluol und einem pH-Wert von 5,3.

| | | |
|---|---|---|
| Polymer: | Glastemperatur | Tg = 28°C |
| | Molmasse | Mn ca. 150 000 |
| | | Mw ca. 800 000 |
| | | Mw/Mn ca. 5,3 |

### Eingesetzte Dispergiermittel:

### Vergleichsbeispiel 1

Na-Dodecylsulfat (Hansanol NS 242 ) - Molekulargewicht 289 g/mol, Feststoffgehalt 27,2 g

### Beispiel 2

Pluronic PE 10500 (Polyethylen-Polypropylen-Blockcopolymer, Molekulargewicht ca. 5700, Feststoffgehalt 100%

### Der Extruderaufbau

Eingesetzt wurde ein gleichläufiger Zweischneckenextruder MC 40 der Fa. Coperion Werner & Pfleiderer mit einem Schneckendurchmesser von 40 mm, mit 10 Extruderschüssen und der Gesamtlänge von 54 D. Die Schneckendrehzahl ließ sich im Bereich 0 bis 1200 UPM variieren.
Schuss 1: offener Schuss, zur Rückwärtsentgasung, fördernde Schneckenelemente.
Schuss 2: offener Schuss, verschlossen mit einer Lochplatte mit einer Bohrung zur Aufnahme eines Einspritzventils zur Dosierung der Polymerlösung, fördernde Schneckenelemente.
3. Schuss: mit Entgasungsöffnung oben, Vorwärtsentgasung, Schnecke mit Förderelementen.
4. Schuss: geschlossenes Gehäuse mit förderndem und neutralem Knetblock, trennt erste von zweiter Entgasungszone.
5. Schuss: offenes Gehäuse, Schnecke mit Förderelementen
6. Schuss: Entgasungsgehäuse Schnecke mit Förderelementen, neutraler Knetblock zwischen Schuss 5 und 6, der beide Entgasungszonen trennt, - danach fördernder und neutraler Knetblock.
7. Schuss: Einspritzung für Dispergiermittel/Wasser-Gemisch, Schnecke mit schmalen Knetblöcken und Zahnmischelementen (diese sind besonders gut geeignet um die wässrigen Komponenten mit der Polymerschmelze intensiv zu vermischen).
8. Schuss: geschlossenes Gehäuse, weitere Mischelemente.
9. Schuss: weitere Einspritzung für Dispergiermittel/Wasser-Gemisch, Mischelemente,
10. und 11. Schuss: geschlossene Gehäuse, Schnecke neutral fördernd, danach Austrag.

Die Entgasungsöffnungen waren mit Kondensatoren versehen, um die entweichenden Lösemitteldämpfe zu kondensieren - die beiden ersten Entgasungen wurden unter Normaldruck betrieben, die beiden anderen unter Vakuum.
Durch die Öffnung in Schuss 2 wurde die Polymerlösung in den Extruder eingepumpt, mittels einer Zahnradpumpe mit beheizter Transferleitung.
Der Bereich bis Schuss 6 diente der Entfernung des Lösemittels; ab Schuss7 der Herstellung der Dispersion.
Über die Zuleitung in Zone 7 wurde Dispergiermittel/Wasser-Gemisch über eine beheizte Leitung eindosiert. In Zone 9 bestand ebenfalls die Möglichkeit, Dispergiermittel/WasserGemisch oder nur Wasser in das System einzubringen. Dispergiermittel, Wasser und Polymerschmelze wurden in diesem Bereich intensiv. Danach erfolgte über zwei geschlossene Gehäuse und rein fördernde Schnecken der Austrag.

Die genauen Fahrdaten sind der Tabelle zu entnehmen.

Es wurde zunächst die Polypropylencarbonatlösung auf dem Extruder in mehreren Stufen vom Lösemittel befreit. Auf der Maschine konnten betriebssicher 8,00 kg Polymerlösung pro h aufgearbeitet werden (entspricht 1,08 kg Polymerdurchsatz pro Stunde).

Als nächstes wurden Emulgierungsversuche der auf dem Extruder entgasten Schmelze mit Na-Dodecylsulfat und Wasser durchgeführt (Vergleichsbeispiel 1). Es konnte jedoch keine Dispersion erhalten werden. Selbst bei hohen Drehzahlen (1000 UPM) war der Auslass am Extruder zweiphasig (flüssig + Schmelzebrocken).

Mit Pluronic® 10500 (Beispiel 2) hingegen, wurde unter den gleichen Bedingungen eine milchige Dispersion erhalten. Zusammensetzung: ca. 35 Gew.-% Polypropylencarbonat, 2 Gew.-% Dispergiermittel und 63 Gew.-% Wasser.

**Tabelle**

| | Vergleichsbeispiel 1 | | Beispiel 2 | |
|---|---|---|---|---|
| Zone | T [°C] | P [mbar] | T | |
| | | | [°C] | |
| 0 | 140 | | 140 | |
| 1 | 141 | 1013 | 141 | 1013 |
| 2 | 140 | 1013 | 140 | 1013 |
| 3 | 161 | | 159 | |
| 4 | 164 | 750 | 162 | 740 |
| 5 | 164 | 4 | 171 | 4 |
| 6 | 162 | | 175 | |
| 7 | 130 | | 135 | |
| 8 | 119 | | 121 | |
| 9 | 101 | | 95 | |
| 10 | 94 | | 95 | |
| Kopf | 101 | | 96 | |
| Tm | | 111 | | 112 |
| Drehzahl [UPM] | | 1000 | | 1000 |
| Dispergiermittel [kg/h] (Zone 6) | | 0.08 (Hansanol) | | 0,07 (Pluronic) |
| Wasser, [kg/h] Zone 9 | | 1,05 | | 2,0 |
| | | Keine Dispersion | | homogene Dispersion, |

| | | | | |
|---|---|---|---|---|
| Tm = Schmelzetemperatur, gemessen im Gehäuse, Schuss 6, am Ende der Entgasung | | | | |

## Patentansprüche

1. Verfahren zur Herstellung von Polypropylencarbonatdispersionen, beinhaltend die Schritte:
(a) Einspritzen einer Lösung eines Polypropylencarbonats in einem aprotischen, nicht mit Wasser mischbaren Lösungsmittel in einen Extuder,
(b) Entfernen des aprotischen Lösungsmittels mittels Entgasung in den ersten Zonen des Extruders, gegebenenfalls unter vermindertem Druck,
(c) Zudosieren eines Dispergiermittels und des Wassers als Einzelkomponenten oder vorgemischt,
(d) kräftige Durchmischung des Gemischs aus Wasser, Dispergiermittel und Polymerschmelze, und
(e) Austrag der Dispersion unterhalb der Siedetemperatur des Wassers.

2. Verfahren nach Anspruch 1, wobei:
(b) das Entfernen des Lösungsmittels bei 110 bis 180 °C und,
(d) die Durchmischung der Dispersion bei 80 bis 98°C durchgeführt werden.

3. Verfahren nach Anspruch 1 oder 2, wobei das nichtionische Dispergiermittel ein Poly-C₂-C₃-alkylenglykol-Blockcopolymer ist.

4. Verfahren nach einem der Ansprüche 1 bis 3, wobei das Dispergiermittel in einer Konzentration von 1 bis 10 Gew.-%, bezogen auf das Polypropylencarbonat zugesetzt wird.

5. Verfahren nach einem der Ansprüche 1 bis 4, wobei der Polypropylencarbonatanteil in der Dispersion bei 25 bis 60 Gew.-% liegt.
